# EUROPEAN PATENT APPLICATION

(11) **EP 3 670 448 A2**
(43) Date of publication of application: **24.06.2020**
(21) Application number: 19217207.0
(22) Date of filing: 17.12.2019
(51) Int. Cl.: C01B 32/10, C01B 32/184, C01B 32/194, B82Y 30/00, B82Y 40/00, C01B 32/21, C01B 32/192

(54) **COMPOSITE MATERIALS COMPRISING CHEMICALLY LINKED FLUOROGRAPHITE-DERIVED NANOPARTICLES**

(30) Priority: 19.12.2018 US 201816225125
(71) Applicant: Palo Alto Research Center Incorporated, Webster, NY 14580 (US)
(72) Inventor: BEH, Eugene Shin Ming, Portola Valley, CA California 94028 (US); IFTIME, Gabriel, Dublin, CA California 94568 (US); WEI, Junhua, Mountain View, CA California 94043 (US); PANDEY, Rahul, San Jose, CA California 95134 (US); RIVEST, Jessica Louis Baker, Palo Alto, CA California 94301 (US)
(74) Representative: Gill Jennings & Every LLP

(57) **Abstract**

A composition of matter includes a functionalized graphene derivative having at least one functional group bonded through a chemical linker to the graphene surface. A method includes reacting fluorographite with at least one reactant, wherein at least one reactant is one of either a di-functional or a multifunctional reactant, to produce a fluorographite derivative.

## Description

This disclosure relates to composite materials more particularly to those with functionalized graphene derived from fluorographite.

Graphene nanosheets, when mixed within a polymer matrix, improve the mechanical properties of a base polymer in terms of elastic modulus, tensile strength, toughness, etc. If the nanosheets are functionalized with chemical groups that can react with the polymer matrix during curing, a network of chemically linked particles would result. The network may have stronger mechanical properties than composites containing similar, but chemically unbonded, particles randomly dispersed within the polymer matrix.

Graphene provides a highly promising filler material for polymer composites. Its outstanding mechanical properties, such as an elastic modulus of 1 TPa and intrinsic strength of 130 GPa could enable the production of strong and light composite materials of interest to the automotive and aerospace industries, among others. Graphene-based nanocomposites typically feature unmodified graphene, graphene oxide (GO), or chemically functionalized graphene nanosheets bearing various functional groups as the filler material. Currently, poor dispersibility of graphene or its derivatives has limited the maximum usable levels of filler loading before the mechanical properties of the composites start to be compromised.

In addition, the production of functionalized graphene presents many challenges. The exfoliation of graphite to form individual graphene sheets, together with the chemical inertness of graphene, makes the production of chemically functionalized graphene nanosheets a slow, low-throughput process that frequently involves numerous synthetic steps. For example, most syntheses of functionalized graphene nanosheets start from graphene oxide (GO), which itself is produced by the Hummers' method, or one of its many variations. The methods invariably utilize excess amounts of strong acids and strong oxidants, both of which lead to the production of large volumes of highly corrosive and reactive waste, and hazardous gases like NO₂, or N₂O₄, for the production of a comparatively small amount of GO.

The functional groups on GO consists primarily of carboxylic acids (-COOH) and alcohols (-OH), along with a small amount of epoxides. These groups generally have low or no reactivity, and further functionalization of GO to provide the functional groups of interest depends on reactive coupling agents or reagents. These both add to the complexity of subsequent purification and ultimately to the cost of the material.

According to aspects illustrated here, there is provided a composition of matter that includes a functionalized graphene derivative having at least one functional group bonded through a chemical linker to the graphene surface.

According to aspects illustrated here, there is provided a method that includes reacting fluorographite with at least one reactant, wherein at least one reactant is one of either a di-functional or a multifunctional reactant, to produce a fluorographite derivative.
Figure 1 shows a comparison of particles with and without polymer matrix-reactive functional groups.
Figure 2 shows a diagram of embodiments of fluorographite reacting with mono- and di-functional reactants to produce fluorographite derivatives.
Figure 3 shows an embodiment of a process of making epoxy-reacted fluorographene.
Figures 4-5 shows an embodiment of a process of producing fluorographite derivatives from amine-reacted fluorographite.
Figures 6-7 shows a graph of attenuated total reflection - Fourier transform infrared spectroscopy spectra for one species of fluorographite derivatives.
Figure 8 shows a graph of thermogravimetric analysis of some species of fluorographite derivatives and a comparison with a graphene oxide derivative.

As used here, the term 'nanosheet' refers to a two-dimensional structure having a thickness typically in the range of 0.1 to 100 nanometers.

As used here, the term 'fluorographite-derived material,' or 'fluorographite derivative' means any material that results from processing fluorographite.

As used here, the term 'functional group' means a group of atoms that gives the organic compound the chemical properties and are the centers of chemical reactivity. A 'functionalized' structure such as a molecule or nanosheet is a structure to which these groups have been added.

As used here, the term 'composite material' means a polymer matrix with embedded nanoparticles.

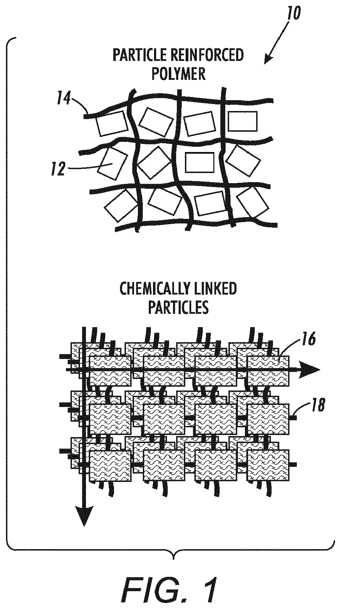

The embodiments here describe the synthesis of graphene nanosheets functionalized with reactive functional groups, where the sheets start from fluorographite instead of graphene oxide. When dispersed into a polymer matrix, the reactive functional groups on the nanosheets form bonds with the polymer matrix to form a robust composite material. The production of fluorographite offers several advantages over processes starting with other materials, including better scalability, less chemical waste, lower costs, and a simpler production process. A composite made with fluorographite-derived material shows improved mechanical properties compared to a composite made with the same proportion of other graphene derived materials. Figure 1 shows a comparison between a particle reinforced polymer 10 in which the particles such as 12 are not chemically bonded to the polymer matrix 14. Using particles of a fluorographite derivative such as 16, dispersed into a polymer matrix 18, and then mixed with a hardener, the particles bond to the polymer matrix upon curing. This results in a much improved particle/polymer interface compared to the unbonded particles such as 12.

Fluorographene (FG) results from a process of exposing graphite to fluorine gas that produces little waste. The process can recover the excess fluorine gas and use it to produce later batches of material. The differences in the difficulties in producing FG and graphene oxide (GO) is reflected in their prices despite both being produced from graphite. FG costs about $0.90 to $1.00 per gram at a 1 kilogram scale, while GO costs $10 - $20/gram. FG has superficial similarities to PTFE (polytetrafluoroethylene), which is inert. However, FG shows surprising chemical reactivity to a wide variety of nucleophilic species.

Where mentioned, the words "fluorographite" and "fluorographene" are intended to be interchangeable and refer to substantially the same material. Just as graphite is composed of more than one sheet of graphene, fluorographite is composed of more than one sheet of fluorographene. References to fluorographene derivatives are also meant to encompass fluorographite derivatives and vice versa. In neither case do "fluorographene derivative(s)" or "fluorographite derivative(s)" carry any meaning to whether the derivative(s) themselves exist as single sheets or as parallel stacks of several sheets.

In addition, the relatively weak interfacial interactions between FG sheets allows for much easier dispersion of the material in a solvent without requiring inefficient ultrasonication.

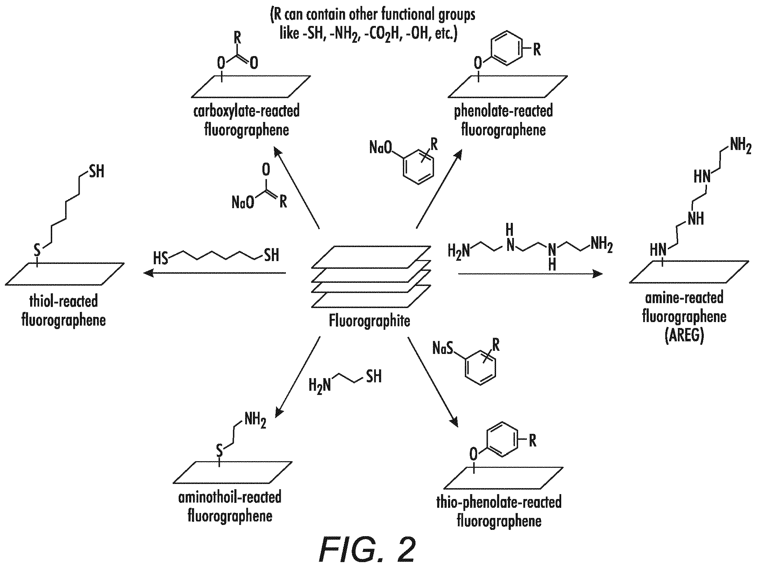

Currently, no reports of derivatives made with di- or multifunctional reactants exist, where the derivatives have pendant functional groups not directly attached to the graphene sheet, but instead indirectly attached through a linker. Figure 2 shows embodiments of fluorographene derivatives produced in one synthetic step from fluorographite. The fluorographite may undergo reactions with thiol, carboxylate, phenolate, amine, thiophenolate, and aminothiol functional groups, among others, to create the reactant-reacted fluorographene. These list is not intended to be exhaustive but instead to demonstrate the diversity of possible derivatives. Moreover, a reagent that reacts with fluorographite may also contain more than one type of functional group instead of multiple copies of the same functional group. One should note that in the carboxylate-reacted fluorographene, the R depicted may contain other functional groups such as -SH, -NH₂, -CO₂H, -OH, etc.

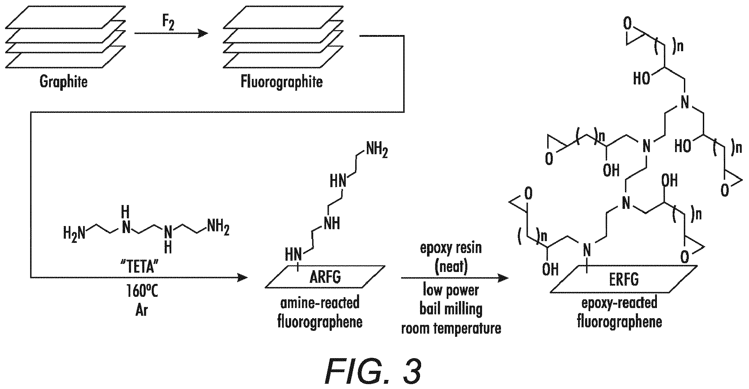

In another embodiment, shown in Figure 3, one can synthesize amine-reacted fluorographene by exposing the fluorographite to TETA (triethylenetetramine) in the presence of argon to produce TETA-reacted fluorographene (ARFG-TETA), which is a type of amine-reacted fluorographene (ARFG). This can then undergo conversion to epoxy-reacted fluorographene (ERFG) by reacting ARFG-TETA with an epoxy resin while performing some sort of milling or mixing at room temperature. These last two compounds in particular result in the chemically linked particles of Figure 1.

The process of Figure 3 is simpler than a typical process to make epoxy-reacted graphene oxide (ERGO). The process of manufacturing ERGO involves rapidly stirring graphene oxide with a concentrated solution of epoxy resin and a small amount of base in N, N-dimethylformamide (DMF) at 125 °C for several days, then filtering and washing it to remove any excess resin and base. In contrast, the FG undergoes direct heating with a volume of triethylenetetramine (TETA), which takes the roles of solvent, base, and nucleophilic reactant. The relatively low molecular weight and viscosity of TETA in making ARFG-TETA, compared to the high viscosity epoxy used to make ERGO, ensures that the filtration of the product ARFG-TETA occurs much more quickly than that of ERGO. As an example, ARFG-TETA was synthesized at a 50 gram scale with no complications.

The subsequent conversion of ARFG-TETA to ERFG resulted from mixing ARFG-TETA with either a neat epoxy resin or a solution of an epoxy resin in an attritor at room temperature. Unlike the production of ERGO from GO, no base or heating is necessary because the amine groups in this particular ARFG are sufficiently reactive with the epoxide groups of the matrix epoxy.

Because of the planar nature of the individual ERFG sheets, the nanoparticles have a strong tendency to align parallel to each other upon coating onto a surface, extrusion, or encountering some other kind of external shear. This alignment can give rise to other desirable properties such as increased abrasion resistance and decreased gas permeability.

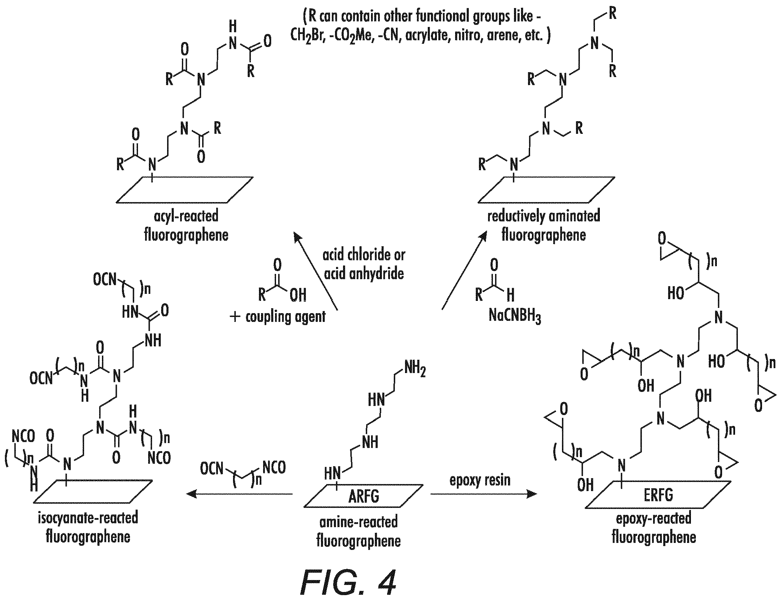

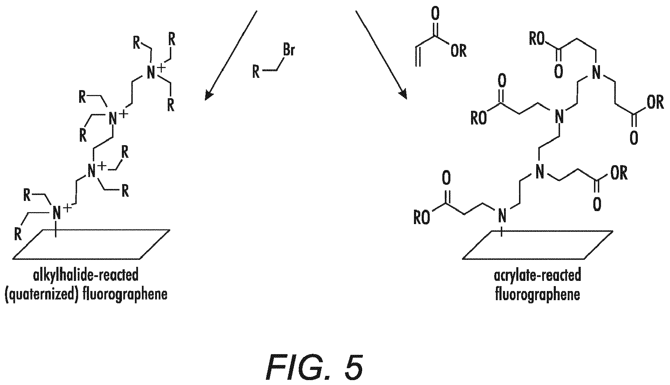

The embodiments here envision mixtures of differently functionalized graphene sheets, each derived from fluorographite, as the filler in a composite material. The presence of two or more different chemical functionalities, tunable to any arbitrary ratio, may allow for creation of composites with improved properties or novel multifunctional materials. Examples of fluorographite derivatives that may result from one synthetic step as in Figure 2, or two synthetic steps as in Figures 4-5.

In Figures 4-5, the process beings with a first fluorographene derivative, ARFG. This derivative can be any type of ARFG but ARFG-TETA is shown for clarity. This may then be reacted with an acyl chloride or acid anhydride as a coupling agent, sodium cyanoborohydride, epoxy resin, acrylates, alkyl halides, and isocyanates. As before, these are just intended to demonstrate the diversity of the possible fluorographene derivatives and no intention to limit it to these compounds is intended nor should it be implied.

In addition to a significantly cheaper source material that is safer to produce, the synthesis of ARFG and ERFG is much easier to scale up and process than that of ERGO. In order to see widespread adoption of these derivatives, they must be producible on a large scale at a low cost. Specific examples of production of fluorographene derivatives in accordance with the embodiments are given below, as well as characterizations of the derivatives.

### Example 1 - Synthesis of ARFG- TETA

52.70 g of graphite fluoride was gradually added to a rapidly stirred volume (∼1 L) of triethylenetetramine in a large round-bottomed flask equipped with a large rare earth magnetic stirring bar. The flask was flushed with argon for ∼5 minutes and then the reaction mixture was heated to 160°C under argon for 24 hours. After heating, the reaction mixture was cooled to room temperature and diluted with ∼1 L of water (caution: exothermic), then filtered through a hydrophilic 0.45 µm PTFE membrane filter. The residue was successively redispersed and filtered with water, 9 ethanol, and 4:1 v/v ethanol/triethylamine. The collected solid was finally redispersed in ethanol, filtered through a 63 µm sieve to remove large particles, then finally filtered one last time through a hydrophilic 0.45 µm PTFE membrane filter and the residue was dried overnight in vacuo at 40°C. Yield: 40.58 g of ARFG-TETA as a very fine black powder.

### Example 2 - Synthesis of Jeffamine D2000 - reacted fluorographene (ARFG-D2000)

2.0000 g of graphite fluoride was gradually added to a rapidly stirred volume (∼200 mL, -1.5 molar equivalents *wrt.* fluorine content) of Jeffamine D2000 in a round-bottomed flask equipped with a rare earth magnetic stirring bar. The flask was flushed with argon for ∼5 minutes and then the reaction mixture was heated to 160°C under argon for 72 hours. After heating, the reaction mixture was cooled to room temperature and diluted with ∼500 mL of DMF, then filtered through a hydrophilic 0.45 µm PTFE membrane filter. The residue was successively rinsed with DMF, isopropanol, and 4:1 v/v isopropanol/triethylamine. The collected solid was finally redispersed in isopropanol, filtered through a 63 µm sieve to remove large particles, then finally filtered one last time through a hydrophilic 0.45 µm PTFE membrane filter and the residue was dried overnight in vacuo at 40°C. Yield: 3.6048 g of ARFG-D2000 as a very fine black powder with a tendency to clump together.

### Example 3 - Synthesis of epoxy-reacted ARFG-TETA modified with EPON 826 (ERFG-TETA-826)

1.7023 g of ARFG-TETA was placed in an attritor jar. ∼150 g of 3 mm stainless steel grinding balls were added, followed by ∼100 g of EPON-826. EPON-826 is a specific formulation of low viscosity, liquid, bisphenol A-based, epoxy resin. For ease of discussion, it will be referred to as EPON -826 but other bisphenol A-based epoxy resins may be used. The attritor was stirred for 2 days at room temperature (i.e. the ARFG-TETA was subjected to "low power ball milling"). After 2 days, the suspension was mixed well with ∼250 mL of acetone and filtered. The residue was rinsed with acetone and dried overnight in vacuo to give 1.8183 g of ERFG-826 as a very fine black powder.

### Example 4 - Synthesis of epoxy-reacted ARFG-TETA modified with EPON 1007F (ERFG-TETA-1007F)

Approximately 40 g of EPON-1007F was stirred with 60 mL of N,N-dimethylacetamide (DMAc) at 50°C until all solids dissolved. 2.0000 g of ARFG-TETA was placed in an attritor jar. ∼150 g of 3 mm stainless steel grinding balls were added, followed by the solution of EPON-1007F in DMAc prepared earlier. The attritor was stirred for 2 days at room temperature (i.e. the ARFG-TETA was subjected to "low power ball milling"). After 2 days, the suspension was mixed well with ∼250 mL of THF and filtered. The residue was rinsed with THF, resonicated in more THF, filtered and rinsed with THF again, and finally dried overnight in vacuo to give 2.0453 g of ERFG-TETA-1007F as a very fine black powder.

### Example 5 - Synthesis of epoxy-reacted ARFG-D2000 modified with EPON 826 (ERFG-D2000-826)

2.0000 g of ARFG-D2000 was placed in an attritor jar. ∼150 g of 3 mm stainless steel grinding balls were added, followed by ∼100 g of EPON-826. The attritor was stirred for 2 days at room temperature (i.e. the ARFG-D2000 was subjected to "low power ball milling"). After 2 days, the suspension was mixed well with ∼250 mL of acetone and filtered. The residue was rinsed with acetone and dried overnight in vacuo to give 2.5135 g of ERFG-D2000-826 as a very fine black powder with a tendency to clump together.

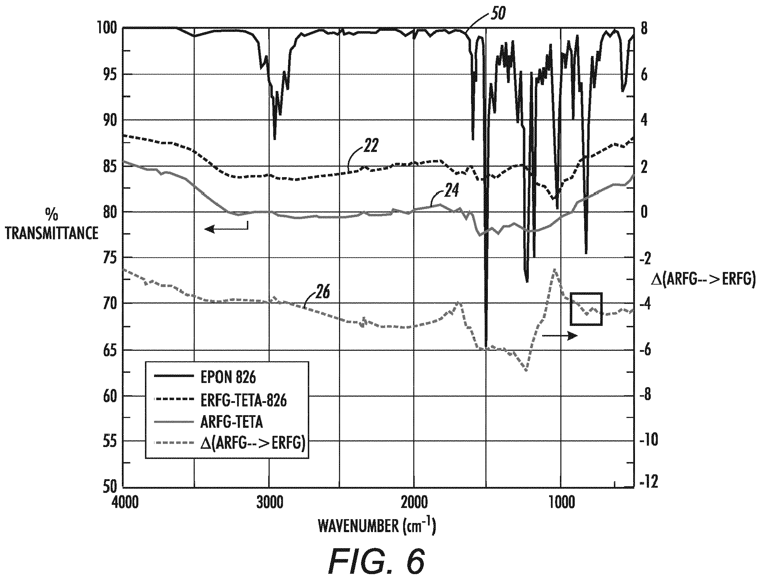

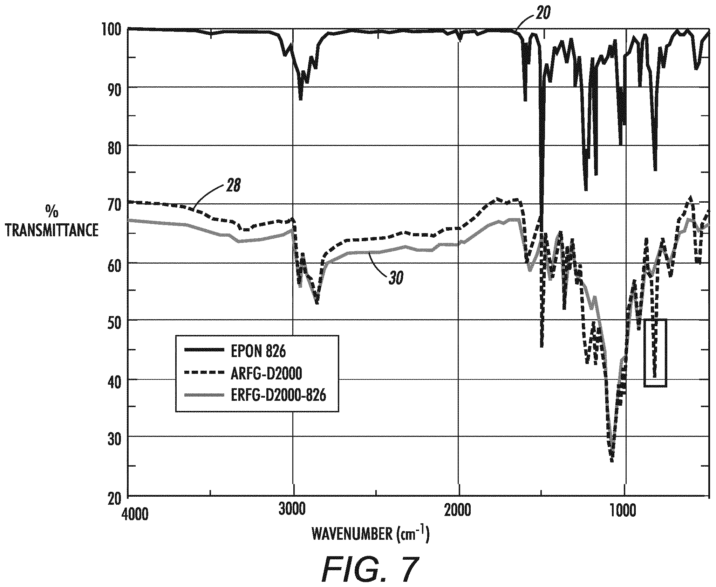

Figures 6 and 7 show results of attenuated total reflection - Fourier transform infrared spectroscopy (ATR-FTIR) for ARFG-TETA, ERFG-TETA-826, ARFG-D2000, and ERFG-D2000-826. The analysis confirmed that the two ARFG samples were both capable of chemically reacting with the epoxy resin to incorporate epoxide groups into the material. In Figure 6, line 20 is EPON 826, line 22 is ARFG-TETA, line 24 is ERFG-TETA-826 and line 26 is the difference between IR absorbance between ERFG-TETA-826 and ARFG-TETA, represented on the right vertical axis. In Figure 7, line 20 is EPON 826, line 28 is ERFG-D2000-826 and line 30 is ARFG-D2000. These figures show that the reactions of both ARFG species with EPON 826 results in the incorporation of epoxy functionalities into the material. IR absorption characteristics of the groups are shown in both figures as the black boxes.

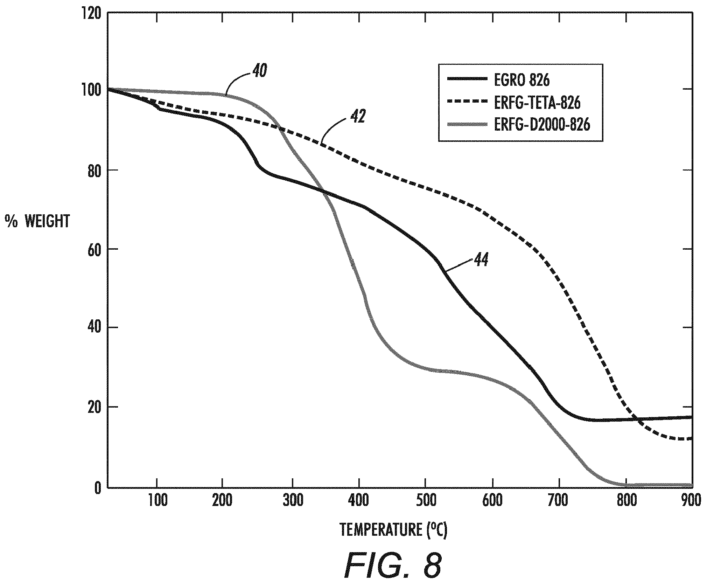

Figure 8 shows results from the thermogravimetric analysis (TGA). It shows that ERFG-TETA-826 and ERFG-D2000-826 has a smaller proportion of non-pyrolizable graphene content than ERGO-826. These results also are consistent with larger organic groups attached to the graphene sheets than for ERGO-826. In Figure 8, line 40 is ERFG-D2000-826, line 42 is ERFG-TETA-826, and line 44 is ERGO-826.

### Example 6 - Epoxy formulations with ERFG and ERGO

Epoxy formulations were prepared with ERFG and ERGO, obtained from reaction of ARFG-TETA with EPON-826 or the reaction of GO with EPON-826, respectively. Formulations consisted of 30% ERFG or ERGO, 65% EPON 826, and 5% 1-ethyl-3-methylimidazolinium dicyanamide as thermal polymerization initiator and crosslinker. The formulations were extruded from a syringe and cast into dog bone shaped molds and subsequently cured at 90°C for 15 hours, then removed from the molds and placed in an oven for 2 hours at 220 °C.

The mechanical properties of the dog bones in Example 4 (modulus and tensile strength: ASTM D638; toughness: calculated from the area under the stress-strain curve, expressed as tensile energy absorption, MPa) are summarized in Table 1. The results show that, compared to ERGO, ERFG showed lower stiffness but exhibited marked improvements to the tensile strength and toughness.

| | ERGO Formulation | ERFG Formulation |
|---|---|---|
| Toughness (MPa) | 1.0 | 2.5 |
| Strength (MPa) | 92 | 113 |
| Elastic Modulus (GPa) | 7.6 | 4.9 |

A main difference between fluorographite-derived functionalized nanosheets and those derived from graphene oxide lies in the nature of the bonding closest to the graphene sheet. By nature of the reaction mechanism, GO-derived functionalized graphene nanosheets will have a large number of carboxyl groups bonded directly to the graphene sheet through the carboxylate carbon, whereas fluorographite-derived functionalized graphene nanosheets will not have any. Furthermore, fluorographene-derived functional graphene nanosheets will usually have a heteroatom that is not carbon or oxygen bonded directly to the graphene sheet. This is not possible for GO-derived functionalized graphene nanosheets.

By reacting fluorographite with a reagent containing more than one functional group, a chemically functionalized fluorographene derivative containing one or more functional groups bonded through a chemical linker to the graphene surface can be created. The term 'bonded through a chemical linker' or 'bound through a chemical linker' means that the functional group is not bonded directly to the graphene surface, but indirectly through the rest of the molecule through covalent bonds, coordinate bonds, hydrogen bonds, and other generally recognized forms of chemical bonds. The functional group is not completely untethered to the graphene surface.

These functional groups may include amine, alkene, alkyne, aldehyde, ketone, epoxide, alcohol, thiol, alkyl halide, nitro, amide, ester, carboxylic acid, poly(ethylene oxide), nitrile, quaternary ammonium, imadazolium, and sulfonate groups. These groups that are bonded through a chemical linker to the graphene surface may have the capability to react and form chemical bonds during mixing and subsequent curing with an originally uncured or partially cured polymer matrix material. This may result in a composite material having a polymeric matrix and the functionalized graphene derivative having the unbound groups. The functionalized graphene material is a fluorographene derivative but may not have any fluorine in it after functionalization, or may just have a trace amount in the range of 0.01 to 10 %.

## Claims

1. A composition of matter, comprising a functionalized graphene derivative having at least one functional group bonded through a chemical linker to the graphene surface.

2. The composition of matter as claimed in claim 1, wherein the at least one functional group is selected from the group consisting of: amine; alkene; alkyne; aldehyde; ketone; epoxide; alcohol; thiol; alkyl halide; nitro; amide; ester; carboxylic acid; acyl halide; isocyanate; carbodiimide; poly(ethylene oxide); nitrile; quaternary ammonium; imidazolium; and sulfonate.

3. The composition of matter as claimed in claim 1, further comprising an amount of fluorine in the range of 0.01 to 10 wt % of the composition of matter.

4. The composition of matter as claimed in claim 1, wherein the at least one functional group bonded through a chemical linker to the graphene surface has the capability to react and form chemical bonds during mixing and subsequent curing with one of either an uncured thermoset resin, a partially cured thermoset resin, or a curing agent that reacts with the thermoset resin during curing.

5. A composite material, comprising:
a thermoset resin as a matrix; and
the composition of matter as claimed in claim 1 as a filler.

6. The composite material as claimed in claim 5, wherein the matrix is either in an uncured, partially cured, or fully cured state.

7. The composite material as claimed in claim 6, wherein the at least one functional group bonded through a chemical linker to the graphene surface can undergo a chemical reaction with at least one of the functional groups on the thermoset resin.

8. The composite material as claimed in claim 6, wherein the matrix in an uncured, partially cured, or fully cured state contains an admixture of an appropriate curing agent that can undergo a chemical reaction with at least one of either at least one functional group on the matrix or at least one function group bonded through a chemical linker in the filler.

9. The composite material as claimed in claim 8, wherein the curing agent contains at least one of amine, hydrazide, mercaptan, polysulfide, imidazole, alcohol, isocyanate or acid anhydride functional groups, or dicyanamide ions, or dicyandiamide.

10. A method, comprising reacting fluorographite with at least one reactant, wherein at least one reactant is one of either a di-functional or a multifunctional reactant, to produce a fluorographite derivative.

11. The method as claimed in claim 10, wherein the fluorographite derivative is one selected from the group consisting of: carboxylate-reacted fluorographene; phenolate-reacted fluorographene; alkoxide-reacted fluorographene; amine-reacted fluorographene; thiophenolate-reacted fluorographene; aminothiol-reacted fluorographene; and thiol-reacted fluorographene.

12. The method as claimed in claim 10, wherein the at least one of either di-functional or multifunctional reactant has at least one of its functional groups selected from the group consisting of: amine; alkene; alkyne; aldehyde; ketone; epoxide; alcohol; thiol; alkyl halide; nitro; amide; ester; carboxylic acid; acyl halide; isocyanate; carbodiimide; poly(ethylene oxide); nitrile; quaternary ammonium; imidazolium; and sulfonate.

13. The method as claimed in claim 10, further comprising:
mixing fluorographite with one of either a difunctional or multifunctional reactant having at least one nucleophilic functional group to form a reaction mixture;
filtering the reaction mixture to produce residue;
washing the residue with a solvent; and
drying the residue to produce the fluorographite derivative.

14. The method as claimed in claim 10, wherein the at least one of either di-functional or multifunctional reactant comprises a chain aliphatic polyamine, an alicyclic polyamine, an aliphatic aromatic amine, or an aromatic amine, and the fluorographite derivative comprises amine-reacted fluorographene (ARFG).

15. The method as claimed in claim 14, further comprising:
reacting the ARFG with an epoxy resin; and
mixing the ARFG and epoxy resin to produce epoxy-reacted fluorographene (ERFG).

16. The method as claimed in claim 14, further comprising reacting the ARFG with a reagent containing at least one functional group that reacts with ARFG to produce one selected from the group consisting of: acrylate-reacted fluorographene; alkyl halide-reacted fluorographene; isocyanate-reacted fluorographene; acyl-reacted fluorographene; and reductively aminated fluorographene.

17. The method as claimed in claim 16, wherein the reagent containing at least one functional group that reacts with ARFG is a di-functional or multi-functional epoxy resin.

18. The method as claimed in claim 16, wherein the reagent containing at least one functional group that reacts with ARFG is a di-functional or multi-functional isocyanate.

19. The method as claimed in claim 16, wherein the reagent containing at least one functional group that reacts with ARFG is a di-functional or multi-functional acid anhydride or acyl halide.

20. The method as claimed in claim 16, wherein the reagent containing at least one functional group that reacts with ARFG is a di-functional or multi-functional alkyl halide, alkyl sulfonate, benzyl halide, or benzyl sulfonate.
